# EUROPEAN PATENT APPLICATION

(11) **EP 2 384 017 A2**
(43) Date of publication of application: **02.11.2011**
(21) Application number: 11163975.3
(22) Date of filing: 27.04.2011
(51) Int. Cl.: H04Q 9/00

(54) **Method for measuring an operational parameter of a wind turbine and measurement device**

(30) Priority: 30.04.2010 US 770823
(71) Applicant: General Electric Company, Schenectady, NY 12345 (US)
(72) Inventor: Menke, Detlef, 48499 Salzbergen (DE)
(74) Representative: Bedford, Grant Richard

(57) **Abstract**

A measurement device adapted for measuring at least one operational parameter of a wind turbine (100) is provided. The measurement device includes a control unit (300) including a light source (303) adapted for emitting light and an optical waveguide (401) connected to the control unit (300) and adapted for transmitting the light emitted from the light source (303) to a sensor device (200). The sensor device (200) is adapted for detecting the at least one operational parameter and includes an optical-to-electrical power conversion unit (203) adapted for receiving the light emitted by the light source (303) and transmitted via the optical waveguide (401), and for converting the received light into electrical operation power which is provided for the sensor device (200).

## Description

The present disclosure generally relates to a measurement device adapted for measuring operational parameters of a wind turbine. Operational parameters of a wind turbine may include environmental parameters at the location of the wind turbine such as, e.g. wind velocity, wind direction, temperature, ambient humidity, etc., and parameters indicating an operation condition of a wind turbine such as, e.g. bending moments at a tower or a rotor blade structure, rotational velocities of rotating components such as a hub, a main axis and a gearbox axis of the wind turbine, etc..

In addition to that the present disclosure relates to a method for measuring operational parameters of a wind turbine during the operation of the wind turbine.

An urgent need to provide environmentally safe and reliable energy sources drives a development of modem wind turbines. Wind turbines are of increasing importance as such kind of energy sources. A wind turbine typically includes a rotor having at least one rotor blade and a hub for converting incoming wind energy into rotational mechanical energy. A rotation of the hub of the wind turbine is transferred to a main rotor shaft driving an electrical generator. A plurality of individual mechanical and electrical components interact within a wind turbine such that an efficiency for converting wind energy into electrical energy is an issue.

During the operation of a wind turbine, typically a plurality of operational parameters is monitored. The detection of operational parameters is typically not only performed within the hub of the wind turbine, but a parameter detection may be performed at remote sensing locations such as measurement locations at a tip of at least one rotor blade of a wind turbine or different measurement locations along the length of a rotor blade.

Albeit many measurement systems only consume a very little amount of electrical energy, the electrical energy is typically transmitted via electrical wires from an energy source towards the location of measurement/the location of the measurement system.

With respect to electromagnetic compatibility and potential lightning strike areas, exposed measurement locations such as locations at the rotor blades of a wind turbine are issues to be considered. Another issue is the size of the measurement system with respect to its electrically conducting components.

In view of the above according to an aspect of the present invention, a measurement device adapted for measuring at least one operational parameter is provided, said measurement device including a control unit including a light source adapted for emitting light, an optical waveguide connected to the control unit and adapted for transmitting light emitted from the light source to a sensor device, and said sensor device adapted for detecting the at least one operational parameter, the sensor device including an optical-to-electrical power conversion unit adapted for receiving light emitted by the light source and transmitted via the optical waveguide, and for converting the received light into electrical operation power which is provided for the sensor device.

According to another aspect a measurement device adapted for measuring at least one operational parameter is provided, said measurement device including a control unit including a radio frequency power transmitter adapted for emitting radio frequency waves, an antenna connected to the control unit and adapted for transmitting radio frequency waves emitted from the radio frequency power transmitter to a sensor device, and said sensor device adapted for detecting the at least one operational parameter, the sensor device including a radio frequency-to-electrical power conversion unit adapted for receiving radio frequency wavesemitted by the radio frequency power transmitter and transmitted via the antenna, and for converting the received radio frequency wavesinto electrical operation power which is provided for the sensor device.

According to yet another aspect a wind turbine including at least one rotor blade and a hub, and at least one measurement device is provided, said measurement device including a control unit including a light source adapted for emitting light, an optical waveguide connected to the control unit and adapted for transmitting light emitted from the light source to a sensor device, and said sensor device adapted for detecting the at least one operational parameter, the sensor device including an optical-to-electrical power conversion unit adapted for receiving light emitted by the light source and transmitted via the optical waveguide, and for converting the received light into electrical operation power which is provided for the sensor device.

Various aspects, advantages and features of the present invention are apparent from the dependent claims, the description and the accompanying drawings, in which:
Fig. 1 shows a side view of a wind turbine including a rotor having at least one rotor blade wherein the rotor blade is provided with a sensor unit, according to a typical embodiment;
Fig. 2 is a front view of a rotor blade mounted at a hub, illustrating an arrangement of sensor units and sensor controller devices along the length of the rotor blade, according to a typical embodiment;
Fig. 3 is a front view of a rotor blade mounted at a hub, wherein several sensor units are illustrated to interact with one sensor controller device for the measurement of operational parameters along the length of the rotor blade of the wind turbine, according to another typical embodiment;
Fig. 4 is a block diagram illustrating components of a sensor device and a control unit which are connected via an optical link unit, according to a typical embodiment;
Fig. 5 is a block diagram illustrating components of a sensor device and a control unit which are connected via a radio frequency link unit, according to another typical embodiment;
Fig. 6 depicts a graph showing an optical radiation intensity as a function of wavelength for optical power supply radiation and optical data link radiation; and
Fig. 7 is a flowchart illustrating a method for measuring at least one operational parameter of a wind turbine, according to a typical embodiment.

Reference will now be made in detail to the various exemplary embodiments, one or more examples of which are illustrated in the drawings. Each example is provided by way of explanation and is not meant as a limitation. For example, features illustrated or described as part of one embodiment can be used on or in conjunction with other embodiments to yield yet a further embodiment. It is intended that the present disclosure includes such modifications and variations.

A number of embodiments will be explained below. In this case, identical structural features are identified by identical reference symbols in the drawings. The structures shown in the drawings are not depicted true to scale but rather serve only for the better understanding of the embodiments.

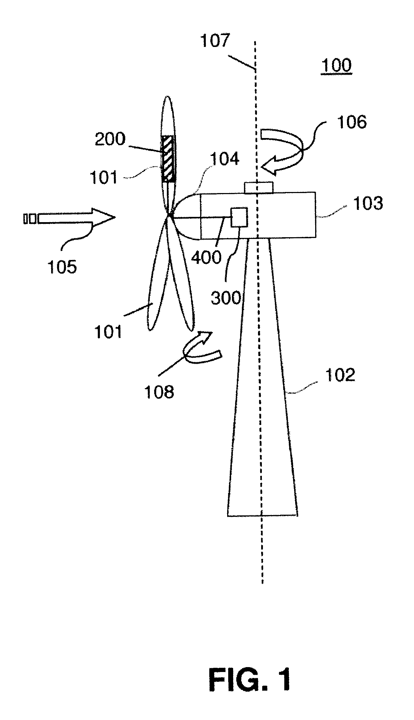

Fig. 1 shows a side view of a wind turbine 100 according to a typical embodiment. The wind turbine 100 includes a tower 102 and a machine nacelle 103 which is rotatably arranged atop the tower 102. The machine nacelle 103 may be rotated about a typically vertical tower axis 107 such that a rotor of the wind turbine is directed towards an incoming wind direction 105. This adjustment is achieved by changing a yaw angle 106 of the machine nacelle 103 with respect to the tower 102.

The machine nacelle 103 carries the rotor having at least one rotor blade 101 and a hub 104. The at least one rotor blade 101 may be adjusted with respect to a strength of the incoming wind 105, e.g. a wind velocity by changing a pitch angle 108 of an individual rotor blade 101. A change of the pitch angle 108 corresponds to a rotation of an individual rotor blade 101 about its longitudinal axis.

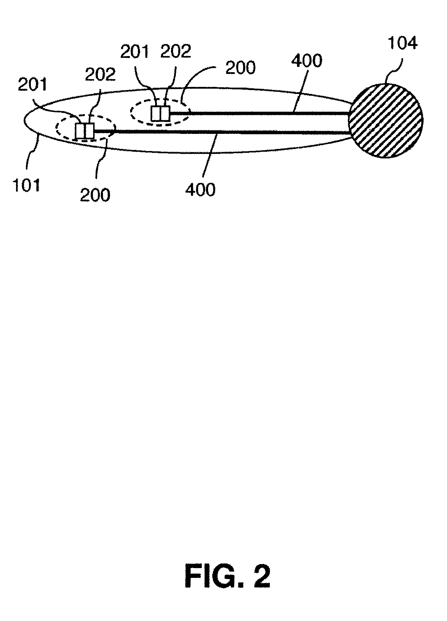

According to a typical embodiment, a sensor device 200 is installed at one of the rotor blades 101, as shown in Fig. 1. In Fig. 1, the sensor device 200 is shown schematically by a hatched area. The components of the sensor device 200, e.g. a sensor unit and a controller device are detailed below with respect to Fig. 2. Within the machine nacelle 103, a control unit 300 is provided which is connected to the sensor device 200 via an optical link unit 400. The connection between the sensor device 200 and the control unit 300 will be described herein below with respect to Figs. 2 to 5.

Fig. 2 is a front view of an individual rotor blade 101 mounted at the hub 104 of the wind turbine 100. As shown in Fig. 2, two individual sensor units 201 are installed along the length of the rotor blade 101. A sensor controller device 202 is provided for each individual sensor unit 201 for controlling the sensor unit and for transmitting supply energy between a control unit (not shown in Fig. 2) and the sensor controller device via an optical link unit 400. Fig. 2 illustrates two optical link units 400 for each individual sensor unit/sensor controller device 201/202 combination.

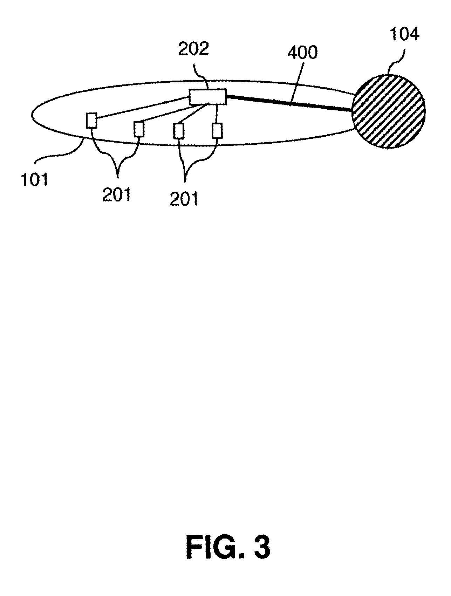

It is noted here, albeit Fig. 2 and 3 indicate sensor units 201 installed at an individual rotor blade 101, that sensor units 201 may be installed at other locations of the wind turbine, e.g. at the machine nacelle, (e.g. for the measurement of wind velocity and direction), at the tower (e.g. for the measurement of local forces and bending moments), etc.

Albeit not limited to specific sensor devices, an individual sensor unit 201 of a sensor device 200 may include at least one of a fibre Bragg grating, a thin film sensor, an anemometer unit, a laser Doppler velocimeter, a strain gauge probe, an acceleration sensor, and a pitot tube. The skilled person is familiar with the operation of this kind of sensors for the measurement of e.g. stresses, bending moments, forces, wind direction and strength, air pressures and air pressure differences, such that a detailed description of the functional principles of the individual sensor units 201 which may be included in the parameter detection 200 are not detailed here.

Moreover it is noted here that at least one sensor unit 201 may be connected to the sensor controller device 202 by means of a non-electrical coupling such as, but not limited to, a flexible pressure tubing.

Furthermore, it is possible to provide a free-space optical link unit between the sensor device 200 and the control unit 300 instead of an optical fibre cable 400, albeit not shown in the drawings. The control unit 300 is not shown in Figs. 2 and 3 and may be included in the hub 104 and/or the machine nacelle 103 of the wind turbine 100.

The sensor device 200 as the one shown in Fig. 2 includes at least one sensor unit 201 and a sensor controller device 202 for controlling the sensor unit 201. For each individual sensor device 200, a separate optical link unit 400 may be provided, as illustrated in Fig. 2. The combination of an individual sensor unit 201 and a sensor controller device 202 in order to form a sensor device 200 may be provided small-scale, i.e. electrically conducting components include a volume which can be neglected with respect to the volume of an individual rotor blade 101.

In this context, it is noted that Figs. 2 and 3 are not necessarily drawn to scale. With respect to electromagnetic interference, these miniaturized sensor devices 200 may be neglected. Moreover, potential lightning strike areas are reduced because electrically conducting components are restricted to the volume of an individual sensor device 200.

As mentioned before, an optical link unit 400 does not include any electrically conducting components. The optical link unit 400 including e.g. an optical fibre, serves as a data transmission unit for transmitting measurement data obtained by a respective sensor unit 201 towards the control unit 300 (not shown) which may be arranged within the hub 104 or the machine nacelle 103.

It is noted here that, albeit only two sensor devices 200 are shown at two separate positions along an individual rotor blade 101, a plurality of sensor devices 200 may be installed along the length of a rotor blade. These individual sensor devices 200 may measure individual measurement signals such as wind velocity, air pressure, wind direction, etc. using the measurement systems described above. Using the results of these measurements, it is possible to enhance an efficient control of an entire wind turbine 100, e.g. by adjusting the pitch angle 108 of an individual rotor blade 101 (see Fig. 1).

The optical link unit 400 may be provided as a fibre optic cable. The fibre optic cable may be used as a power transmission unit alone or may be used as a combination of a power transmission unit and a data communication link. If a fibre optical cable or a free-space optical link are provided, the electromagnetic radiation is typically provided as an optical wave. The optical wave may be provided within the visible spectral region, i.e. in a region between 380 nm and 780 nm. Furthermore, an optical waveguide and the data link using light may be provided in the infrared, IR, spectral region.

Fig. 3 illustrates a front view of an individual rotor blade 101 of a wind turbine 100 connected to a hub 104. As shown in Fig. 3, a single sensor controller device 202 is provided and is connected to the control unit 300 (not shown in Fig. 3) via a single optical link unit 400. The single sensor controller device 202 serves as a controller device for a plurality of individual sensor units 201, in the case shown in Fig. 3, the sensor controller device 202 serves as a controller device for four sensor units 201.

The connection between the sensor controller device 202 and the sensor unit 201 typically are electrical wires such that an electrical conducting volume within the individual rotor blade 101 of the wind turbine 100 is increased a little bit with respect to the arrangement shown in Fig. 2. A main data transmission and a transmission of supply power to the sensor controller device 202, however, is provided by an optical link via the optical link unit 400.

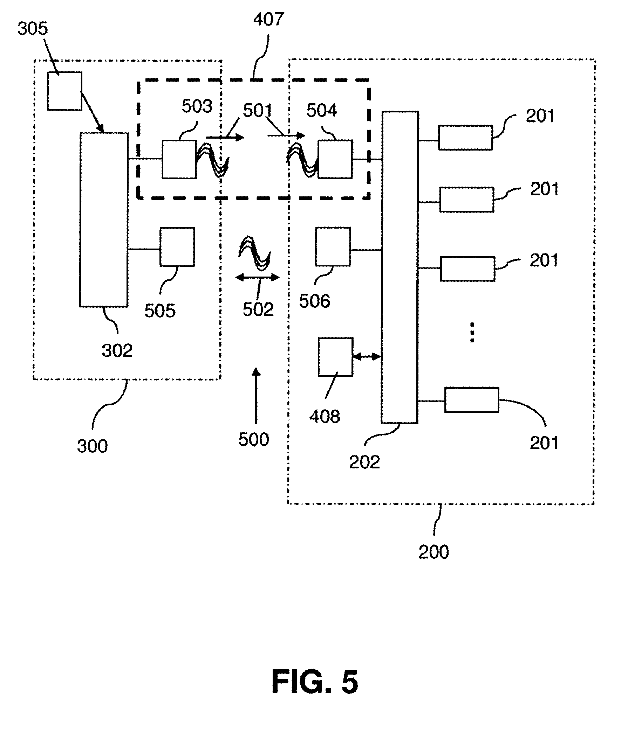

Besides providing the electromagnetic radiation for power and/or data transmission as an optical wave, at least one of the data transmission and the power transmission may be provided as an electromagnetic radiation in the radio frequency range, as will be described herein below with respect to Fig. 5. The frequency of the radio frequency wave may be in the range between 700 MHz and 1000 MHz, more particularly between 800 and 900 MHz, and even more typically about 866 MHz.

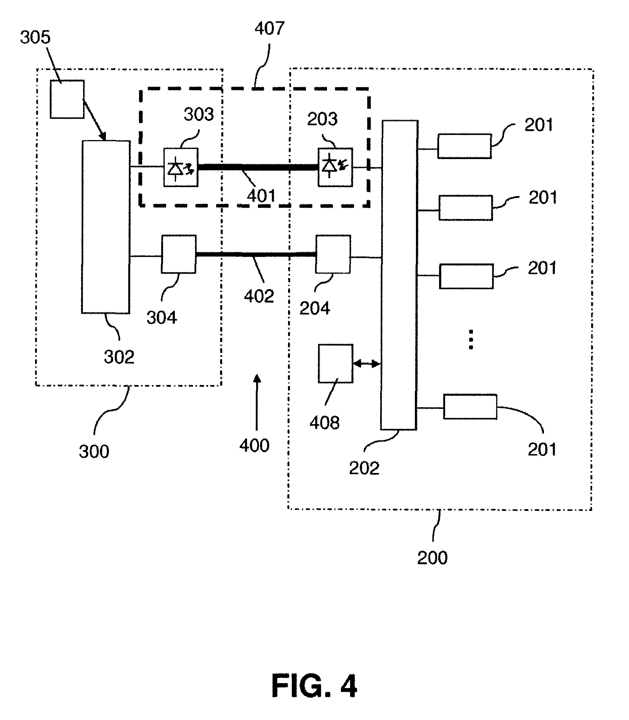

Fig. 4 is a block diagram of a measurement device adapted for measuring at least one operational parameter of a wind turbine 100, according to a typical embodiment. According to this embodiment shown in Fig. 4, a sensor device 200 is connected to a control unit 300 via an optical link unit 400. The optical link unit 400 includes an optical waveguide 401 for transmitting operational power from the control unit 300 to the sensor device 200 and an optical data waveguide 402 for exchanging control and measurement data between the control unit 300 and the sensor device 200.

It is noted here, albeit not shown in Fig. 4, that at least a part of the optical waveguide 401 for transmitting operational power from the control unit 300 to the sensor device 200 and/or at least a part of the optical data waveguide 402 for exchanging control and measurement data between the control unit 300 and the sensor device 200 may be replaced by at least one free-space optical link unit.

Such kind of data exchange may be based on time-multiplexing, frequency-multiplexing and amplitude-modulation techniques. Furthermore it is possible to superpose data to be transmitted from the control unit 300 to the sensor device 200 onto the light wave which is emitted from the light source 303 of the controller device 300.

The sensor device 200 includes a plurality of sensor units 201 which are connected to a single sensor controller device 202. Furthermore, it is possible, albeit not shown in Fig. 4, to provide an individual sensor controller device 202 for each individual sensor unit 201. The sensor device 200 may include an energy storage means 408 to provide a storage of e.g. a back-up energy for operating the sensor device 200.

It is noted here, albeit not shown in Fig. 4, that the optical waveguide 401 and the optical data waveguide 402 of the optical link unit 400 may be combined in a single optical link capable of transmitting supply power from the control unit 300 to the sensor device 200 and for exchanging control and measurement data between the control unit 300 and the sensor device 200.

As illustrated in Fig. 4, a data transmission is provided via the optical data waveguide 402 which is connected, at the side of the control unit 300, to an optical-to-electrical data conversion unit 304, and at the side of the sensor device 200, to a data light source. Thus it is possible to optically transmit data between the sensor device 200 and the control unit 300.

Furthermore, a power transmission unit 407 is provided as a connection between the control unit 300 and the sensor device 200. The power transmission unit 407 includes a light source 303 for emitting light as optical power, the optical waveguide 401 adapted for transmitting the light from the side of the control unit 300 towards the side of the sensor device 200 and an optical-to-electrical power conversion unit 203 adapted for receiving the light transmitted via the optical waveguide 401 and for converting the received light in electrical power which is provided for the sensor controller device 202 of the optical sensor device 200.

It is noted here that the optical-to-electrical power conversion unit 203 converts the received light into electrical operation power on the basis of its optical-to-electrical power conversion efficiency.

The control unit 300 is designed for controlling the wind turbine 100 on the basis of at least one operational parameter measured by at least one sensor unit 201 of the sensor device 200. The light source 303 may include a high-power laser diode. High-efficiency laser diodes may be provided in the spectral wavelength range of about 600 nm to 700 nm, particularly about 650 nm to 670 nm. Furthermore, the optical output power may vary, for example, between 5 mW and 300 mW, more typically between 7 mW and 200 mW. In an exemplary embodiment, a high-efficiency laser diode has a spectral wavelength of about 655 nm and provides an optical output power of about 7 mW. In another exemplary embodiment, a high-efficiency laser diode has a spectral wavelength of about 660 nm and provides an optical output power of about 200 mW.

The optical-to-electrical power conversion unit 203 at the side of the sensor device 200 may include a photodiode, which is tuned to the laser diode in the light source 303 with respect to an efficient optical power-to-electrical power conversion efficiency. Photodiodes may operate in a voltage range between about 2 V and about 30 V, more particularly between 5 V and 20 V, and at currents between 2 mA and 160 mA, more particularly between 5 mA and 100 mA . Several mW up to several ten mW of electrical power may be obtained using the power transmission unit 407 described herein above.

Part of the electrical power which is not used by the sensor unit 201 and the sensor controller device 202, respectively, may be stored in the energy storage means 408 for later use. The optical waveguide 401 of the power transmission unit 407 may as well be used for data transmission. I.e., the data transmission unit including the optical-to-electrical data conversion unit 304, the data light source 204 and the optical data waveguide 402 may be combined with the components of the power transmission unit 407.

Moreover, it is possible, as shown in Fig. 5, that the electromagnetic radiation for transmitting operation power to the sensor device and for providing a data link between the sensor device 200 and the control unit 300 may be provided in the radio frequency range, i.e. the electromagnetic radiation is provided as a radio frequency wave. This radio frequency may be in the range between 700 MHz and 1000 MHZ, more particularly between 800 and 900 MHz, and even more typically about 866 MHz.

Fig. 5 is a block diagram illustrating components of a sensor device 200 and a control unit 300 which are connected via an RF, i.e. radio frequency link unit 500, according to another typical embodiment which may be combined with other embodiments. Fig. 5 illustrates a block diagram of a measurement device similar to that shown in Fig. 4 except that a radio frequency link is provided instead of an optical link, between the sensor device 200 and the control unit 300.

According to the embodiment shown in Fig. 5, the sensor device 200 is connected to a control unit 300 via the radio frequency link unit 500. The radio frequency link unit 500 includes a radio frequency power link 501 adapted for transmitting operational power as electromagnetic waves from the control unit 300 to the sensor device 200, and radio frequency data link 502 for exchanging control and measurement data between the control unit 300 and the sensor device 200.

It is noted here that the radio frequency power link 501 may be provided as a directional radio link system including at least one antenna, typically a directional transmitting antenna located at the control unit 300 and a directional receiving antenna located at the sensor device 200, the antennas being mutually adjustable with respect to each other.

Such kind of radio frequency power link 501 typically may operate at distances of several 10 cm, more typically at a distance of less than 20 cm. It is noted here that, albeit distances to sensor units arranged at a rotor blade 101 of a wind turbine 100 may be larger than several 10 cm, sensor units installed at other components of the wind turbine (e.g. an anemometer atop the machine nacelle, bending strain gauges at the tower, etc.) may be provided with electrical energy using the radio frequency power link 501 in accordance with a typical embodiment. Furthermore, and in accordance with another typical embodiment, a data exchange via the radio frequency data link 502 may as well be performed without using or employing the radio frequency power link 501.

As described before, and as depicted in Fig. 4, the sensor device 200 includes a plurality of sensor units 201 which are connected to a single sensor controller device 202. Furthermore, it is possible, albeit not shown in Fig. 5, to provide an individual sensor controller device 202 for each individual sensor unit 201. The sensor device 200 may include an energy storage means 408 to provide a storage of e.g. a back-up energy for operating the sensor device 200.

As illustrated in Fig. 5, a data transmission is provided via the radio frequency data link 502 which is connected, at the side of the control unit 300, to a master-side data radio frequency transceiver 505, and at the side of the sensor device 200, to a sensor-side data radio frequency transceiver 506.

Furthermore, a power transmission unit 407 is provided as a connection between the control unit 300 and the sensor device 200. The power transmission unit 407 includes a radio frequency power transmitter 503 for emitting radio frequency waves, the radio frequency power link 501 adapted for transmitting the radio frequency power from the side of the control unit 300 towards the side of the sensor device 200, and a radio frequency power transceiver 504 for receiving radio frequency wavestransmitted via the radio frequency link 501 and for converting the received radio frequency wavesinto electrical power which is provided for the sensor controller device 202 of the optical sensor device 200.

It is noted here that the radio frequency power transceiver 504 converts the received radio frequency wavesinto electrical operation power on the basis of its radio frequency-to-electrical power conversion efficiency.

The control unit 300 is designed for controlling the wind turbine 100 on the basis of at least one operational parameter measured by at least one sensor unit 201 of the sensor device 200.

Part of the electrical power which is not used by the sensor unit 201 and the sensor controller device 202, respectively, may be stored in the energy storage means 408 for later use. The radio frequency power link 501 of the power transmission unit 407 may as well be used for data transmission. I.e., components of the radio frequency data link 502 may be combined with the components of the power transmission unit 407.

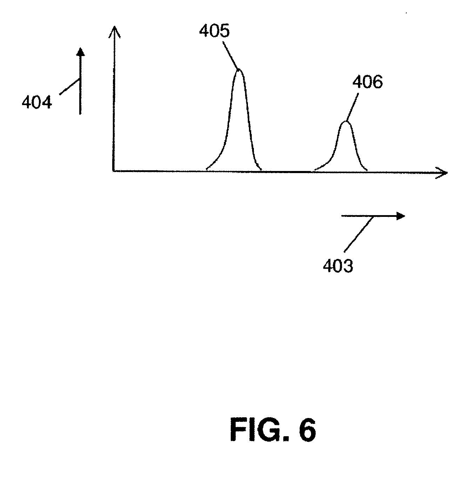

Fig. 6 is a graph indicating an radiation intensity 404 of different optical radiations as a function of wavelength 403. A reference numeral 405 indicates a power supply radiation which is used, at a specific wavelength 403, for transmitting light from the control unit to the sensor device 200. As illustrated in Fig. 6, a data link radiation 406 is provided at a different wavelength 403 for exchanging control and measurement data between the sensor device 200 and the control unit 300. Fig. 5 indicates a kind of wavelength-division-multiplexing such that, even if the optical power and the communication data are transmitted via the same optical fibre, an interference between power transmission and communication data transmission is avoided.

Thus, an operational power transmission and a data transmission are carried out at different frequencies of the electromagnetic spectrum. Furthermore, it is possible to transmission parameter detection data and operation power simultaneously. Parameter detection data and the operation power may be transmitted mutually alternating in a time division mode. If e.g. no data are transmitted, the optical power may be used to recharge the energy storage means 408 of the sensor device 200. Furthermore, the parameter detection data and the operation power may be transmitted mutually alternating in a frequency division mode.

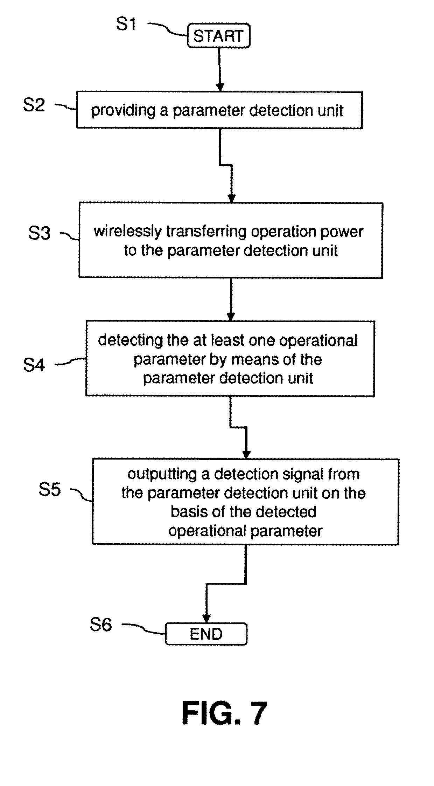

Fig. 7 is a flowchart illustrating a method for measuring at least one operational parameter of a wind turbine 100. The procedure starts at a step S1 and proceeds to a step S2 where a sensor device 200 is provided.

Then, at a step S3, operation power is wirelessly transmitted to the sensor device 200. The sensor device and the sensor unit 201 within the sensor device 200, respectively, are then used for detecting the at least one operational parameter in a following step S4.

Then the procedure advances to a step S5 where a detection signal is output from the sensor device 200 on the basis of the detected operational parameter. The detected signal may be transmitted on the same optical fibre link as the light is transmitted which is used for operating the sensor device 200 with its sensor units 201. Then the procedure is ended at a step S6.

The light which is transmitted from the control unit 300 to the sensor device 200 may be provided within a limited optical spectral region. The optical energy is transmitted by the optical fibre 401 and is converted into electrical energy for use as a power supply. It is noted here that a plurality of sensor devices 200 may be connected to a control unit 300.

The invention has been described on the basis of embodiments which are shown in the appended drawings and from which further advantages and modifications emerge. However, the disclosure is not restricted to the embodiments described in concrete terms, but rather can be modified and varied in a suitable manner. It lies within the scope to combine individual features and combinations of features of one embodiment with features and combinations of features of another embodiment in a suitable manner in order to arrive at further embodiments.

It will be apparent to those skilled in the art, based upon the teachings herein, that changes and modifications may be made without departing from the disclosure and its broader aspects. That is, all examples set forth herein above are intended to be exemplary and non-limiting.

This written description uses examples to disclose the invention, including the preferred mode, and also to enable any person skilled in the art to practice the described subject-matter, including making and using any devices or systems and performing any incorporated methods. While various specific embodiments have been disclosed in the foregoing, those skilled in the art will recognize that the spirit and scope of the claims allows for equally effective modifications. Especially, mutually non-exclusive features of the embodiments described above may be combined with each other. The patentable scope is defmed by the claims, and may include such modifications and other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A measurement device adapted for measuring at least one operational parameter of a wind turbine, said measurement device comprising:
   a control unit comprising a light source adapted for emitting light;
   an optical waveguide connected to the control unit and adapted for transmitting light emitted from the light source to a sensor device; and
   said sensor device adapted for detecting the at least one operational parameter, the sensor device comprising an optical-to-electrical power conversion unit adapted for receiving light emitted by the light source and transmitted via the optical waveguide, and for converting the received light into electrical operation power which is provided for the sensor device.
2. The measurement device in accordance with clause 1, wherein the sensor device further comprises a data light source adapted for emitting data light on the basis of the at least one measured operational parameter, and wherein the control unit has an optical-to-electrical data conversion unit adapted for receiving the data light and for converting the data light into electrical data.
3. The measurement device in accordance with any preceding clause, further comprising an optical data waveguide adapted for transmitting the data light emitted from the data light source to the optical-to-electrical data conversion unit.
4. The measurement device in accordance with any preceding clause, wherein the data light source and the optical-to-electrical data conversion unit are provided as optical transceivers adapted for mutually exchanging data between the control unit and the sensor device via the optical data waveguide.
5. The measurement device in accordance with any preceding clause, wherein the optical waveguide and the optical data waveguide are formed as a single waveguide adapted for transmitting both optical power and optical data between the control unit and the sensor device.
6. The measurement device in accordance with any preceding clause, wherein the light source for providing electrical operation power for the sensor device and the data light source for emitting data light on the basis of the at least one measured operational parameter are adapted for emitting light at mutually different wavelengths.
7. The measurement device in accordance with any preceding clause, wherein the light source is at least one of a high power laser diode, an optical diode array, a light emitting diode, and a discharge lamp.
8. The measurement device in accordance with any preceding clause, wherein the optical-to-electrical power conversion unit is at least one of a photo diode, a photo element an array of photodiodes, and an array of photo elements.
9. The measurement device in accordance with any preceding clause, wherein the sensor device comprises at least one of a fibre Bragg grating, a thin film sensor, an anemometer, a laser Doppler velocimeter, a strain gauge probe, an acceleration sensor, and a pitot tube.
10. A measurement device adapted for measuring at least one operational parameter of a wind turbine, said measurement device comprising:
   a control unit comprising a radio frequency power transmitter adapted for emitting radio frequency waves;
   an antenna connected to the control unit and adapted for transmitting radio frequency waves emitted from the radio frequency power transmitter to a sensor device; and
   said sensor device adapted for detecting the at least one operational parameter, the sensor device comprising a radio frequency-to-electrical power conversion unit adapted for receiving radio frequency waves emitted by the radio frequency power transmitter and transmitted via the antenna, and for converting the received radio frequency waves into electrical operation power which is provided for the sensor device.
11. The measurement device in accordance with any preceding clause, wherein the sensor device further comprises a sensor-side data radio frequency transceiver adapted for emitting radio frequency data on the basis of the at least one measured operational parameter, and wherein the control unit has an radio frequency-to-electrical data conversion unit adapted for receiving the radio frequency data and for converting the radio frequency data into electrical data.
12. The measurement device in accordance with any preceding clause, wherein the sensor-side data radio frequency transceiver and the radio frequency-to-electrical data conversion unit are provided as radio frequency transceivers adapted for mutually exchanging data between the control unit and the sensor device.
13. The measurement device in accordance with any preceding clause, wherein the radio frequency power transmitter for providing electrical operation power for the sensor device and the sensor-side data radio frequency transceiver adapted for emitting radio frequency data on the basis of the at least one measured operational parameter are adapted for emitting radio frequency waves at mutually different frequencies.
14. The measurement device in accordance with any preceding clause, wherein the sensor device comprises at least one of a fibre Bragg grating, a thin film sensor, an anemometer, a laser Doppler velocimeter, a strain gauge probe, an acceleration sensor and a pitot tube.
15. The measurement device in accordance with any preceding clause, wherein a frequency of the radio frequency power is typically in the range between 700 MHz and 1000 MHz.
16. A wind turbine comprising at least one rotor blade and a hub, and at least one measurement device, said measurement device comprising:
   a control unit comprising a light source adapted for emitting light;
   an optical waveguide connected to the control unit and adapted for transmitting the light emitted from the light source to a sensor device; and
   said sensor device adapted for detecting the at least one operational parameter, the sensor device comprising an optical-to-electrical power conversion unit adapted for receiving the light emitted by the light source and transmitted via the optical waveguide, and for converting the received light into electrical operation power which is provided for the sensor device.
17. The wind turbine in accordance with any preceding clause, wherein the sensor device further comprises a data light source adapted for emitting data light on the basis of the at least one measured operational parameter, and wherein the control unit has an optical-to-electrical data conversion unit adapted for receiving the data light and for converting the data light into electrical data.
18. The wind turbine in accordance with any preceding clause, further comprising an optical data waveguide adapted for transmitting the data light emitted from the data light source to the optical-to-electrical data conversion unit.
19. The wind turbine in accordance with any preceding clause, wherein the optical waveguide and the optical data waveguide are formed as a single waveguide adapted for transmitting both optical power and optical data between the control unit and the sensor device.
20. The wind turbine in accordance with any preceding clause, wherein the sensor device is installed at the at least one blade of the wind turbine, and wherein an output signal of the sensor device is transmitted to the hub via the optical data waveguide.

## Claims

1. A measurement device adapted for measuring at least one operational parameter, said measurement device comprising:
a control unit (300) comprising a light source (303) adapted for emitting light;
an optical waveguide (401) connected to the control unit (300) and adapted for transmitting light emitted from the light source (303) to a sensor device (200); and
said sensor device (200) adapted for detecting the at least one operational parameter, the sensor device (200) comprising an optical-to-electrical power conversion unit (203) adapted for receiving light emitted by the light source (303) and transmitted via the optical waveguide (401), and for converting the received light into electrical operation power which is provided for the sensor device (200).

2. The measurement device in accordance with claim 1, wherein the sensor device (200) further comprises a data light source (204) adapted for emitting data light on the basis of the at least one measured operational parameter, and wherein the control unit (300) has an optical-to-electrical data conversion unit (304) adapted for receiving the data light and for converting the data light into electrical data.

3. The measurement device in accordance with any preceding claim, further comprising an optical data waveguide (402) adapted for transmitting the data light emitted from the data light source (204) to the optical-to-electrical data conversion unit (304).

4. The measurement device in accordance with any preceding claim, wherein the data light source (204) and the optical-to-electrical data conversion unit (304) are provided as optical transceivers adapted for mutually exchanging data between the control unit (300) and the sensor device (200) via the optical data waveguide (402).

5. The measurement device in accordance with any preceding claim, wherein the optical waveguide (401) and the optical data waveguide (402) are formed as a single waveguide adapted for transmitting both optical power and optical data between the control unit (300) and the sensor device (200).

6. The measurement device in accordance with any one of the preceding claims, wherein the light source (303) for providing electrical operation power for the sensor device (200) and the data light source (204) for emitting data light on the basis of the at least one measured operational parameter are adapted for emitting light at mutually different wavelengths.

7. The measurement device in accordance any one of the preceding claims, wherein the light source (303) is at least one of a high power laser diode, an optical diode array, a light emitting diode, and a discharge lamp.

8. A measurement device adapted for measuring at least one operational parameter, said measurement device comprising:
a control unit (300) comprising a radio frequency power transmitter (503) adapted for emitting radio frequency waves;
an antenna connected to the control unit (300) and adapted for transmitting radio frequency wavesemitted from the radio frequency power transmitter (503) to a sensor device (200); and
said sensor device (200) adapted for detecting the at least one operational parameter, the sensor device (200) comprising a radio frequency-to-electrical power conversion unit adapted for receiving radio frequency wavesemitted by the radio frequency power transmitter (503) and transmitted via the antenna, and for converting the received radio frequency waves into electrical operation power which is provided for the sensor device (200).

9. The measurement device in accordance with claim 8, wherein the sensor device (200) further comprises a sensor-side data radio frequency transceiver (506) adapted for emitting radio frequency data on the basis of the at least one measured operational parameter, and wherein the control unit (300) has an radio frequency-to-electrical data conversion unit adapted for receiving the radio frequency data and for converting the radio frequency data into electrical data.

10. The measurement device in accordance with claim 9, wherein the sensor-side data radio frequency transceiver (506) and the radio frequency-to-electrical data conversion unit are provided as radio frequency transceivers adapted for mutually exchanging data between the control unit (300) and the sensor device (200).
